# EUROPÄISCHE PATENTSCHRIFT

(11) **EP 2 388 180 B1**
(45) Veröffentlichungstag und Bekanntmachung des Hinweises auf die Patenterteilung: **01.10.2014**
(21) Anmeldenummer: 11003633.2
(22) Anmeldetag: 04.05.2011
(51) Int. Cl.: B62D 15/02, B62D 13/06, B60R 1/07

(54) **Rückfahrhilfeeinrichtung zur Regelung einer Rückwärtsfahrt eines Fahrzeuggespanns**
Reversing aid device for regulating a reverse motion of a road vehicle train
Dispositif d'aide à la marche arrière pour le réglage de la marche arrière d'un train de véhicule automobile

(30) Priorität: 19.05.2010 DE 102010021052
(43) Veröffentlichungstag der Anmeldung: 23.11.2011
(73) Patentinhaber: Audi AG, 85045 Ingolstadt (DE); Audi Electronics Venture GmbH, 85080 Gaimersheim (DE)
(72) Erfinder: Roehder, Martin, 85049 Ingolstadt (DE)
(74) Vertreter: Thielmann, Frank

(56) Entgegenhaltungen:
- DE-A1-102005 043 468
- DE-A1-102005 043 468
- DE-A1-102007 040 250
- DE-A1-102007 040 250
- DE-A1-102008 034 720
- DE-A1-102008 034 720
- JP-A- 2003 148 938
- US-A1- 2004 060 807

## Beschreibung

Die Erfindung betrifft eine Rückfahrhilfeeinrichtung zur Regelung einer Rückwärtsfahrt eines Fahrzeuggespanns mit einem Zugfahrzeug und einem Anhänger, umfassend ein Bedienelement zur Eingabe eines einen durch einen automatischen Lenkeingriff einzustellenden Soll-Winkels zwischen der Längsachse des Zugfahrzeugs und des Anhängers oder zwischen der Längsachse des Anhängers und seiner Anhängerdeichsel, wobei das Bedienelement wenigstens zwei Bewegungsfreiheiten aufweist, wobei bei Bewegung des Bedienelements in der ersten Bewegungsfreiheit der Soll-Winkel erhöht oder erniedrigt und bei Bewegung in der zweiten Bewegungsfreiheit der Soll-Winkel auf 0° gesetzt wird.

Die Rückwärtsfahrt mit einem Fahrzeuggespann bestehend aus einem Zugfahrzeug und einem Anhänger bereitet häufig Schwierigkeiten, da für manche Fahrer die reale Bewegung des Anhängers in Abhängigkeit der vom Fahrer vorgenommenen Bewegung des Lenkrads und daraus resultierend der Lenkung des Zugfahrzeugs mitunter nur schwer vorhersehbar ist. Zu diesem Zweck wird bei einem modernen Kraftfahrzeug häufig eine Rückfahrhilfeeinrichtung vorgesehen, die der Regelung einer solchen Rückwärtsfahrt dient. Der Fahrer gibt über ein Bedienelement einen Soll-Winkel vor, der beispielsweise den Knick-Winkel zwischen der Längsachse des Zugfahrzeugs und des eine ungelenkte Radachse aufweisenden Anhängers definiert. Die Rückfahrhilfeeinrichtung umfasst oder ihr zugeordnet ist ferner eine Einrichtung, über die ein automatischer Lenkeingriff am Zugfahrzeug möglich ist, über die also automatisch die Vorderräder (und bei zusätzlich gelenkten Hinterrädern gegebenenfalls auch die Hinterräder) ausgelenkt werden können. Hierüber wird über eine geeignete Steuer- oder Regeleinrichtung die Lenkung des Zugfahrzeugs nun derart beeinflusst, dass sich der eingestellte Soll-Winkel einstellt. Im Bereich der Ankopplung des Anhängers an das Zugfahrzeug oder, wenn der Soll-Winkel den Knick-Winkel zwischen der Längsachse des Anhängers und seiner Anhängerdeichsel eines eine lenkbare Achse aufweisenden Anhängers definiert, im Bereich der Achsanlenkung der Anhängerachse, ist ein Sensorelement vorgesehen, das den Ist-Winkel erfasst. Eine geeignete Steuer- oder Regelungseinrichtung wertet nun den kontinuierlich gemessenen Ist-Winkel aus und veranlasst einen entsprechenden Lenkeingriff, sodass sich in möglichst kurzer Zeit der vorgegebene Soll-Winkel einstellt.

Bei einem aus DE 10 2005 043 467 A1 bekannten Rückfahrhilfesystem wird als Eingabeeinrichtung respektive Bedienelement beispielsweise ein Joystick verwendet, der sowohl in Längs- als auch in Querrichtung verschwenkbar ist. Durch eine Bewegung in Querrichtung, ausgehend von einer Nullstellung, kann der entsprechende Soll-Winkel eingestellt werden, während eine Bewegung in Längsrichtung der Längsführung des Zugfahrzeugs dient. Die Bedienung der Rückfahrhilfeeinrichtung über diesen Joystick ist aus mehrerlei Gründen problematisch. Hat der Fahrer einen Soll-Winkel eingestellt und bei vorzunehmender Einstellung des Soll-Winkels im Knickbereich die Fahrt aufgenommen, und möchte eher nach oder kurz vor Ende der Kurvenfahrt das Gespann in einer geraden Linie weiterbewegen, so muss er erst umständlich den eingestellten Soll-Winkel in den systemimantenten inkrementellen Schritten wieder auf Null einstellen, wozu er den Joystick in die entsprechend entgegengesetzte Richtung bewegen muss. Der Joystick ist während der Längsbewegung jedoch auch in Längsrichtung ausgelenkt, sodass die Einstellung des Soll-Winkels noch umständlicher ist. Da der Joystick wie beschrieben zur Längsführung des Fahrzeugs zu bewegen ist, besteht darüber hinaus die Gefahr, dass es bei Bewegen des Joysticks in Längsrichtung zu einer ungewollten Querbewegung kommt, woraus möglicherweise eine Veränderung des zuvor eingestellten Soll-Winkels resultiert.

Aus der Druckschrift DE 10 2005 043 468 A1 ist ein Rückfahrhilfesystem zur Regelung der Rückwärtsfahrt eines Fahrzeuggespanns bekannt. In diesem dient eine Eingabeeinrichtung zur Eingabe einer kursbestimmenden Fahrvorgabe und ein Detektionsmittel zur Erfassung einer die aktuelle Position des Anhängers relativ zum Zugfahrzeug beschreibenden Anhänger-Zugfahrzeug-Winkellage. Durch Berechnungsmittel wird ein Soll-Lenkwinkel als Lenksteuerungsbefehl für einen automatischen Lenkeingriff bestimmt, wobei Stellmittel zur Durchführung des Lenksteuerbefehls vorgesehen sind. Die Eingabeeinrichtung umfasst Schaltmittel zur Aktivierung eines Geradeausfahrmodus und die Berechnungsmittel sind eingerichtet, im Geradeausfahrmodus den Soll-Lenkwinkel derart zu berechnen, dass die Anhänger-Zugfahrzeug-Winkellage bei Fortsetzung der Rückwärtsfahrt in eine Geradeausstellung für eine Fahrt in Geradeausrichtung gebracht wird. Als Schaltmittel für eine Aktivierung des Geradeausfahrmodus ist ein Taster vorgeschlagen. Eine Fahrervorgabe eines gewünschten Wertes für den Anhängerlenkwinkel kann durch ein Potentiometer, einen Joystick oder einen Drivestick erfolgen.

Der nächstliegende Stand der Technik ist in der DE 10 2005 043 468 zu sehen.

Der Erfindung liegt damit das Problem zugrunde, eine Rückfahrhilfeeinrichtung anzugeben, die auf einfache Weise die Einstellung des Soll-Winkels und seine Rücksetzung auf den neutralen 0°-Wert ermöglicht.

Zur Lösung dieses Problems ist bei der Rückfahrhilfeeinrichtung der eingangs genannten Art erfindungsgemäß vorgesehen, dass das Bedienelement ein Dreh-Drück-Steller ist, wobei die erste Bewegungsfreiheit die Rotation und die zweite Bewegungsfreiheit die Translation ist, wobei die Einstellung des 0°-Winkels durch Drücken in Richtung der Drehachse des Dreh-Drück-Stellers erfolgt, wobei ein Anzeigedisplay vorgesehen ist, an dem wenigstens eine Information betreffend den oder abgeleitet aus dem Soll-Winkel darstellbar ist.

Das erfindungsgemäße Bedienelement weist zwei separate Bewegungsfreiheiten auf, denen unterschiedliche Funktionalitäten zugeordnet sind. Wird das Bedienelement in der einen Bewegungsfreiheit bewegt, so kann der Soll-Winkel, der den einzustellenden Knick-Winkel definiert, in inkrementellen Schritten, beispielsweise in 1 °-Schritten, erhöht oder erniedrigt werden. Der jeweils eingestellte Wert wird dem Fahrer beispielsweise an einem geeigneten Display angezeigt. Um dann, wenn der Fahrer die Rückwärtsfahrt in gerader Richtung fortsetzen will, zu vermeiden, dass er umständlich durch erneute Bewegung des Bedienelements in der ersten Bewegungsfreiheit den Soll-Winkel wiederum inkrementell reduzieren muss, ist der zweiten Bewegungsfreiheit die automatische Einstellung des Soll-Winkels auf 0° zugeordnet. Das heißt, dass bei einer Bewegung des Bedienelements in der zweiten Bewegungsfreiheit der Soll-Winkel automatisch auf den neutralen 0°-Wert gesetzt wird. Der Fahrer ist also nicht gezwungen, das Bedienelement in der ersten Bewegungsfreiheit quasi zurückzubewegen und inkrementell den Soll-Winkel-Wert zu reduzieren, was mitunter länger dauern kann, je nachdem wie schnell der Winkelwert reduziert wird und was auch dazu führen kann, dass bei schneller Reduzierung über den 0°-Wert hinaus geändert wird, mithin also der Fahrer mehrfach "umschalten" muss. Vielmehr ist eine einfache, kurze Bewegung des Bedienelements in der zweiten Bewegungsfreiheit ausreichend, um automatisch den 0°-Soll-Winkel einzustellen.

Hinsichtlich der Ausgestaltung des Bedienelements sind verschiedene Alternativen denkbar. Erfindungsgemäß ist das Bedienelement ein Dreh-Drück-Steller, wobei die erste Bewegungsfreiheit die Rotation und die zweite Bewegungsfreiheit die Translation ist. Mit einem solchen Bedienelement wird also der Soll-Winkel bei Drehung in der einen Richtung, beispielsweise im Uhrzeigersinn, in positiver Richtung erhöht, während er bei Drehung in der anderen Richtung, also gegen den Uhrzeigersinn, in negativer Richtung erhöht wird. Soll also beispielsweise ein Knick-Winkel von + 45° eingestellt werden, der beispielsweise definitionsgemäß ein Auslenken des beispielsweise ungelenkten Anhängers nach rechts bedeutet, so ist der Dreh-Drück-Steller so lange zu drehen, bis am Display beispielsweise "+ 45°" angezeigt wird. Eine Auslenkung in die andere Richtung oder eine Reduktion des eingestellten Winkels beispielsweise auf "+ 25°" wird durch einfache Drehbewegung in die andere Richtung ermöglicht.

Die Einstellung des 0°-Winkels erfolgt bei Verwendung dieses Bedienelements durch einfaches Drücken in Richtung der Drehachse des Dreh-Drück-Stellers. Hierüber wird der Soll-Winkel, unabhängig davon, welcher Soll-Winkel zuvor eingestellt wurde, sofort auf 0° gesetzt, was dem Fahrer ebenfalls angezeigt wird. Ein solcher Dreh-Drück-Steller lässt auf besonders einfache und intuitive Weise die Einstellung des Soll-Winkels zu, sodass der Fahrer, der im Übrigen häufig bereits die Bedienung diverser Fahrerassistenzsysteme über einen solchen Dreh-Drück-Steller kennt, auch die erfindungsgemäße Rückfahrhilfeeinrichtung mühelos einstellen und bedienen kann.

Eine Alternative zur Verwendung eines Dreh-Drück-Stellers ist ein Dreh-Schiebe-Steller, wobei wiederum die erste Bewegungsfreiheit die Rotation ist, während die zweite Bewegungsfreiheit die Translation ist. Hier erfolgt die Anwahl des 0°-Soll-Winkels durch eine Schiebebewegung senkrecht zur Drehachse beispielsweise nach vorne. Auch hierüber kann auf einfache und intuitive Weise der neutrale Soll-Winkel eingestellt werden.

Eine weitere Alternative eines verwendbaren Bedienelements ist ein in zwei aufeinander senkrecht stehenden Richtungen schieb- oder kippbarer Hebel, also ein Joystick, dessen Bedienrichtungen unterschiedliche Funktionen zugeordnet sind. Eine seitliche Bewegung führt zu einer Erhöhung oder Erniedrigung des Soll-Winkels in inkrementellen Schritten, während ein kurzes Tippen des Hebels beispielsweise nach vorne automatisch die Einstellung des 0°-Soll-Winkels bewirkt.

Wie bereits beschrieben ist erfindungsgemäß ein Anzeigedisplay vorgesehen, an dem wenigstens eine Information betreffend den oder abgeleitet aus dem Soll-Winkel darstellbar ist. Als eine solche Information kann beispielsweise der Wert des Soll-Winkels selbst dargestellt werden, das heißt, dass der Fahrer am Anzeigedisplay den Winkelwert als Zahlenwert angezeigt bekommt, der sich bei Bewegung des Bedienelements entsprechend inkrementell verändert.

Zusätzlich oder alternativ hierzu ist es auch denkbar, dass als Information eine das Fahrzeuggespann gegebenenfalls stilisiert wiedergebende Bilddarstellung, in der das Zugfahrzeug und der Anhänger in einer den eingestellten Soll-Winkel abbildenden Anordnung dargestellt sind, anzeigbar ist. Hier wird dem Fahrer also piktogrammartig die sich ergebende gewinkelte Anordnung von Zugfahrzeug und Anhänger relativ zueinander in Abhängigkeit des eingestellten Soll-Winkels angezeigt. Eine solche Bilddarstellung ist für den Fahrer besonders informativ, da er mitunter mit dem reinen Zahlenwert des Soll-Winkels nicht unbedingt auf die reale Gespanngeometrie schließen kann. Die stilisierte Bilddarstellung kann beispielsweise das Zugfahrzeug und den Anhänger in Form zweier Rechtecke darstellen, denkbar wäre selbst eine Bilddarstellung in Form zweier gewinkelt zueinander stehender Linien, von denen die eine das Zugfahrzeug und die andere den Anhänger darstellt. Selbstverständlich können die beiden Gespannteile auch in unterschiedlichen Farben und Ähnliches dargestellt werden.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines Zuggespanns, und
- Fig. 2: eine Prinzipdarstellung der wesentlichen Komponenten der erfindungsgemäßen Rückfahrhilfeeinrichtung.

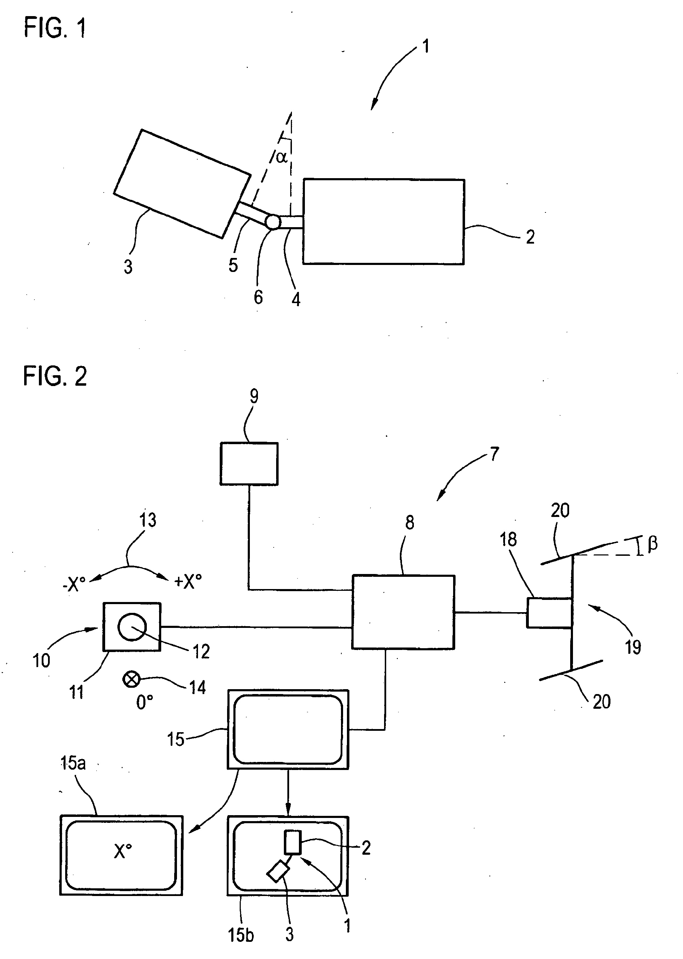

Fig. 1 zeigt in Form einer Prinzipdarstellung ein Zuggespann 1 umfassend ein Zugfahrzeug 2 sowie einen Anhänger 3. Am Zugfahrzeug 2 ist in bekannter Weise eine Anhängerkupplung 4 vorgesehen, an der eine Anhängerstange 5 des im gezeigten Ausführungsbeispiel nur eine starre, also unbewegliche Achse aufweisenden Anhängers 3 angeordnet ist. Es bildet sich eine Drehgelenksverbindung 6 aus, um welche herum der Anhänger 3 relativ zum Zugfahrzeug 2 verschwenken kann, wenn das Zugfahrzeug 2 und damit das Fahrzeuggespann 1 rückwärts fährt. Gezeigt ist ferner der Knick-Winkel α, der sich zwischen dem Zugfahrzeug 2 und dem Anhänger 3 einstellt, wenn die lenkbaren Räder des Zugfahrzeugs 2 aus der Geradeaus-Stellung in der entsprechenden Richtung verstellt werden. Dieser Knick-Winkel α wird über ein in Fig. 1 nicht näher gezeigtes Sensorelement kontinuierlich als Ist-Winkel erfasst und geht nachfolgend in die Berechnung der Steuer- oder Regelparameter ein, über die ein automatischer Lenkeingriff an den lenkbaren Rädern des Zugfahrzeugs 2 erfolgt, um den Ist-Winkel, also den Knick-Winkel α auf einen vom Fahrer gewünschten Soll-Winkel einzustellen.

Fig. 2 zeigt in Form einer Prinzipdarstellung eine erfindungsgemäße Rückfahrhilfeeinrichtung 7 mit ihren wesentlichen Komponenten. Die Rückfahrhilfeeinrichtung 7 umfasst zum einen eine Steuer- oder Regeleinrichtung 8, die als zentrale Einheit den Betrieb der Rückfahrhilfeeinrichtung 7 steuert. Ferner ist ein Sensorelement 9 vorgesehen, das wie bereits beschrieben den Knick-Winkel α, mithin also den momentan gegebenen Ist-Winkel, wie er sich zwischen den Längsachsen des Zugfahrzeugs 2 und des Anhängers 3 einstellt, erfasst, wobei in Fig. 1 der Knick-Winkel α der Übersichtlichkeit halber bezogen auf die jeweiligen Normalen auf die Längsachsen dargestellt ist. Der gemessene Ist-Winkel wird kontinuierlich an die Steuer- oder Regeleinrichtung 8 gegeben.

Vorgesehen ist ferner ein Bedienelement 10 in Form eines Dreh-Drück-Stellers 11. Dieser umfasst einen Knopf 12, der, wie durch den Doppelpfeil 13 dargestellt ist, um eine in die Zeichenebene verlaufende Drehachse rotiert werden kann. Ferner kann er, wie durch das Symbol 14 dargestellt ist, auch in Richtung der Drehachse nach unten gedrückt werden. Die jeweilige Bewegung, die im Falle der Drehbewegung in inkrementell erfassbaren Schritten erfolgt, wird durch nicht näher gezeigte Erfassungsmittel sensiert. Die Rotationsmöglichkeit stellt eine erste Bewegungsfreiheit dar, die Drückmöglichkeit eine zweite Bewegungsfreiheit. Beiden Bewegungsfreiheiten sind unterschiedliche Funktionalitäten zugeordnet, die jedoch jeweils in der Einstellung eines Soll-Winkels, den der Knick-Winkel α, also der Ist-Winkel einnehmen soll, resultieren. Bei einer Bewegung des Knopfes 12 in der ersten Bewegungsfreiheit, wenn er also wie durch den Doppelpfeil 13 dargestellt in und gegen den Uhrzeigersinn gedreht wird, wird der Soll-Winkel, der beispielsweise beim Aktivieren der Rückfahrhilfeeinrichtung 7 auf 0° voreingestellt ist, erhöht (Drehung im Uhrzeigersinn) oder erniedrigt (Drehung gegen den Uhrzeigersinn), wobei ein positiver Soll-Winkel definitionsgemäß beispielsweise dann gegeben ist, wenn der Anhänger, gesehen an einer Aufsicht auf das Zuggespann 1, relativ zum Zugfahrzeug nach rechts ausgeschwenkt ist, während ein negativer Soll-Winkel bei einer Auslenkung des Anhängers 3 relativ zum Zufahrzeug 2 nach links gegeben wäre. Das Bedienelement 10 erfasst nun kontinuierlich die Drehbewegung und die inkrementelle Veränderung und gibt diese wiederum an die Steuer- oder Regeleinrichtung 8, die daraus konkret den vom Fahrer eingestellten Soll-Winkel ermittelt. Die Erhöhung respektive Erniedringung des Soll-Winkels ist in Fig. 2 durch die Angaben "+ x°" bzw. "- x°" dargestellt. Der Fahrer kann hierüber jeden beliebigen Soll-Winkel innerhalb eines definierten Winkelintervalls, das von einem minimalen und einem maximalen Knick-Winkel (respektive über einen negativen Grenzwinkel und einem positiven Grenzwinkel) begrenzt ist, einstellen. Diese Grenzwinkel hängen vom maximalen Winkel ab, den der Anhänger 3 relativ zum Zugfahrzeug 2 einnehmen kann.

Wie beschrieben kann der Knopf 12 auch in Richtung der Drehachse gedrückt werden, wie durch das Symbol 14 dargestellt ist. Dies ist eine zweite Bewegungsfreiheit des Bedienelements 10. Wird der Knopf 12 gedrückt, welche Drückbewegung wiederum sensiert wird und an die Steuer- oder Regeleinrichtung 8 gemeldet wird, stellt diese automatisch einen Soll-Winkel von 0° ein. Das heißt, dass der Bewegung in der zweiten Bewegungsfreiheit zwangsläufig sich ein Soll-Winkel von 0° zugeordnet ist. Der Fahrer kann hierüber, wenn er eine Rückwärtsfahrt vornimmt und von einer Kurvenfahrt in eine gerade Rückwärtsfahrt wechseln möchte, unmittelbar die 0°-Soll-Winkel anwählen, ohne hierfür erst durch Drehen den eingestellten Soll-Winkel schrittweise auf Null zu reduzieren.

Damit der Fahrer Kenntnis über den eingestellten Soll-Winkel erhält, ist ein Display 15 vorgesehen, an dem die Steuer- oder Regeleinrichtung 8 wenigstens eine Information bezüglich des Soll-Winkels oder abgeleitet aus dem eingestellten Soll-Winkel darstellt. In Fig. 2 sind zwei unterschiedliche Möglichkeiten dargestellt. Wie in der linken Bilddarstellung 15a angegeben ist, kann als Information direkt der eingestellte Soll-Winkel Wert, hier "x°", dargestellt werden. Dieser Wert ändert sich kontinuierlich beim Drehen des Knopfes 12 in inkrementellen Schritten, beispielsweise in 1°-Schritten, respektive springt direkt auf 0°, wenn der Knopf 12 gedrückt wird.

Wie in der Bilddarstellung 15b gezeigt, kann (auch zusätzlich zur Angabe des Soll-Winkelwerts gemäß 15a) eine gegebenenfalls stilisierte Bilddarstellung des Zuggespanns 1 gezeigt werden, die stilisiert das Zugfahrzeug 2 und den Anhänger 3 zeigen, wobei deren Winkelstellung relativ zueinander in Abhängigkeit des gerade eingestellten Soll-Winkels dargestellt wird. Die Bilddarstellung ändert sich bei Veränderung des Soll-Winkels kontinuierlich, wird also bei Drehen oder Drücken des Knopfes 12 sofort nachgeführt. Hierüber erhält der Fahrer eine sehr intuitive Information über den eingestellten Knick-Winkel respektive dessen Auswirkung auf die reale "Geometrie" des Zuggespanns 1.

Ist nach Aktivierung der Rückfahrhilfeeinrichtung 7 über einen An-AusSchalter oder dergleichen der Soll-Winkel eingestellt und wünscht der Fahrer, dass die Rückfahrhilfeeinrichtung diesen automatisch einregelt, so bestätigt er beispielsweise zunächst durch Betätigen eines entsprechenden Bedienelements, das hier nicht näher gezeigt ist, den eingestellten Sollwert oder er betätigt einfach das Gaspedal nach Einlegen des Rückwärtsgangs, wobei auch bereits das Einlegen des Rückwärtsgangs als eine solche Bestätigung gewertet werden kann. Hierauf regelt die Steuer- oder Regeleinrichtung über ein Eingriffsmittel 18, das an die Lenkung 19 der Vorderräder 20 angreift, die Lenkung der Vorderräder 20, das heißt, diese werden automatisch verstellt. Der Fahrer ist also hier nicht gefordert. Selbstverständlich kann der Fahrer zu jeder Zeit in den Lenkbetrieb eingreifen, wenn dies aus welchem Grund auch immer erforderlich sein sollte. Über ein nicht näher gezeigtes Sensorelement wird kontinuierlich der Lenkradwinkel β ermittelt und an die Steuer- oder Regeleinrichtung 8 gegeben, die über das Eingriffsmittel 18 kontinuierlich den Lenkwinkel β so einstellt, dass der Knick-Winkel α, also der Ist-Winkel, in kürzester Zeit dem eingestellten Soll-Winkel entspricht.

Wenngleich die gezeigten Figuren ein Fahrzeuggespann mit einem Anhänger 3 mit starrer, also unbeweglicher Achse zeigen, besteht selbstverständlich die Möglichkeit, die erfindungsgemäße Rückfahrhilfeeinrichtung auch bei einem Fahrzeuggespann mit einem Anhänger mit beweglicher, also lenkbarer Hinterachse umfassend eine Anhängerdeichsel einzusetzen. In diesem Fall würde der Knick-Winkel α, als der Winkel zwischen der Längsachse des Anhängers und seiner Anhängerdeichsel respektive deren Längsachse bestimmt, das heißt, dass letztlich die Auslenkung respektive Verdrehung der Anhängerdeichsel relativ zum Anhänger bestimmt wird. Der Soll-Winkel definiert den Winkel, den dieser anhängerbezogene Knick-Winkel durch automatische Einstellung über die Rückfahrhilfeeinrichtung einnehmen soll.

## Patentansprüche

1. Rückfahrhilfeeinrichtung zur Regelung einer Rückwärtsfahrt eines Fahrzeuggespanns mit einem Zugfahrzeug und einem Anhänger, umfassend ein Bedienelement zur Eingabe eines einen durch einen automatischen Lenkeingriff einzustellenden Soll-Winkels zwischen der Längsachse des Zugfahrzeugs und des Anhängers oder zwischen der Längsachse des Anhängers und seiner Anhängerdeichsel, wobei das Bedienelement (10, 11, 12) wenigstens zwei Bewegungsfreiheiten (13, 14) aufweist, wobei bei Bewegung des Bedienelements (10, 11, 12) in der ersten Bewegungsfreiheit der Soll-Winkel erhöht oder erniedrigt und bei Bewegung in der zweiten Bewegungsfreiheit der Soll-Winkel auf 0° gesetzt wird,
**dadurch gekennzeichnet,**
**dass** das Bedienelement (10) ein Dreh-Drück-Steller (11) ist, wobei die erste Bewegungsfreiheit die Rotation und die zweite Bewegungsfreiheit die Translation ist, wobei die Einstellung des 0°-Winkels durch Drücken in Richtung der Drehachse des Dreh-Drück-Stellers erfolgt, wobei ein Anzeigedisplay (15) vorgesehen ist, an dem wenigstens eine Information betreffend den oder abgeleitet aus dem Soll-Winkel darstellbar ist.

2. Rückfahrhilfeeinrichtung nach Anspruch1,
**dadurch gekennzeichnet,**
**dass** als Information der Wert des Soll-Winkels selbst oder eine das Fahrzeuggespann (1) gegebenenfalls stilisiert wiedergebende Bilddarstellung (15b), in der das Zugfahrzeug (2) und der Anhänger (3) in einer den Soll-Winkel abbildenden Anordnung dargestellt sind, anzeigbar ist.

## Claims

1. Reversing assistance device for controlling a reversing operation of a vehicle combination comprising a towing vehicle and a trailer, comprising an operating element for inputting a target angle, which is intended to be set by an automatic steering intervention, between the longitudinal axis of the towing vehicle and of the trailer or between the longitudinal axis of the trailer and the trailer tow-bar thereof, the operating element (10, 11, 12) having at least two ranges of movement (13, 14), the target angle being increased or decreased when the operating element (10, 11, 12) moves in the first range of movement and the target angle being set to 0° when said element moves in the second range of movement, **characterised in that** the operating element (10) is a rotary/push actuator (11), the first range of movement being the rotation and the second range of movement being the translation, the 0° angle being set by pushing in the direction of the axis of rotation of the rotary/push actuator, a display (15) being provided on which at least one item of information relating to or derived from the target angle can be shown.

2. Reversing assistance device according to claim 1, **characterised in that** the value of the target angle itself or an image (15b) which shows the vehicle combination (1) in an optionally stylised manner and in which the towing vehicle (2) and the trailer (3) are shown in an arrangement depicting the target angle can be displayed as an item of information.

## Revendications

1. Dispositif d'aide à la marche arrière pour le réglage d'une marche arrière d'un train de véhicule avec un véhicule tracteur et une remorque, comprenant un élément de réglage pour la saisie d'un angle théorique à régler par un engagement de direction automatique entre l'axe longitudinal du véhicule tracteur et celui de la remorque ou entre l'axe longitudinal de la remorque et celui de sa barre d'attelage, dans lequel l'élément de réglage (10, 11, 12) présente au moins deux libertés de mouvement (13, 14), dans lequel, lors du déplacement de l'élément de réglage (10, 11, 12) dans la première liberté de mouvement, l'angle théorique augmente ou diminue et, lors du déplacement dans la seconde liberté de mouvement, l'angle théorique est réglé sur 0 °,
caractérisé en ce qui :
l'élément de réglage (10) est un commutateur de type tourner-pousser (11), dans lequel la première liberté de mouvement est la rotation et la seconde liberté de mouvement est la translation, dans lequel le réglage de l'angle de 0 ° se fait par pression dans le sens de l'axe de rotation du commutateur de type tourner-pousser, dans lequel il est prévu un affichage indicateur (15) sur lequel au moins une information peut être présentée concernant l'angle théorique ou tirée de celui-ci.

2. Dispositif d'aide à la marche arrière selon la revendication 1,
**caractérisé en ce que** :
on peut représenter comme information la valeur de l'angle théorique lui-même ou une représentation d'image (15b) reproduisant le train de véhicule éventuellement stylisé, dans laquelle le véhicule tracteur (2) et la remorque (3) sont représentés dans un aménagement présentant l'angle théorique.
